# EUROPEAN PATENT SPECIFICATION

(11) **EP 3 651 475 B1**
(45) Date of publication and mention of the grant of the patent: **26.01.2022**
(21) Application number: 19020616.9
(22) Date of filing: 05.11.2019
(51) Int. Cl.: H04R 1/44

(54) **A PRESSURE REGULATOR FOR HYDROPHONE**
DRUCKREGLER FÜR EIN HYDROPHONE
RÉGULATEUR DE PRESSION POUR HYDROPHONE

(30) Priority: 07.11.2018 GB 201818150
(43) Date of publication of application: 13.05.2020
(73) Proprietor: Fish Guidance Systems Limited, Fareham PO15 5AP (GB)
(72) Inventor: Lambert, Michael, Hampshire, SO30 2GG (GB); Mayne, Keith, Hampshire, PO14 2EJ (GB); Latter-Stapley, Tom, Hampshire, PO8 0DL (GB)
(74) Representative: Walker, Neville Daniel Alan

(56) References cited:
- DE-B- 1 216 371
- JP-A- H08 251 687
- US-A- 5 103 432
- US-A- 5 140 560

## Description

The present invention relates to a pressure regulator and in particular to a closed active pressure regulator gas coupled to an acoustic device which is disposed in a fluid typically underwater.

### Prior Art

An acoustic device, such as a speaker, can be deployed underwater for many uses such as guiding fish, providing entertainment etc. However, as the depth of the acoustic device or underwater speaker increases, the external pressure increases proportionally. This pressure increase affects the acoustic response of the underwater speaker due to the external and internal differential pressure. As such the effectiveness of the speaker is reduced.

In response to this problem, the internal pressure around the speaker system can be increased to reduce the pressure differential. It has been proposed that this could be achieved through a passive pressure regulation system by way of a pressurised, compressible external vessel. As the depth and pressure increases, the pressurised vessel is compressed and air is forced into the internal acoustic chamber.

This method of passive gas pressure regulation is limited by the properties of the external vessel and can only be used at low depths. For example, when a speaker is disposed in a neoprene bag in salt water and depths of no more than 25 m, under long term use, i.e. periods of 9 months or so, the neoprene bag loses pressure and the gas therefore needs to be replaced.

In response to increasing pressure at depth, alternative methods of passive pressure compensation have been developed: see for example the pressure compensators from Link: Fathom Systems Ltd. Typically, these systems operate at depths of greater than 1000 m where pressures exceed 1 × 10⁷ Pa. These systems are designed for use with electronic or hydraulic systems that can be submerged in hydraulic fluid due to the compressibility of air at these extreme depths limiting the pressure compensation systems working range. As the pressure increases with depth, the piston, which is exposed on one surface to the water, compresses the hydraulic fluid and increases pressure inside the electronics chamber. A disadvantage of a passive oil filled pressure compensation system is that they do not allow pressures to be regulated to high resolution e.g. tens of Pascals. In addition, the systems require a fluid filled enclosure for the electronic equipment.

US5,103,432A shows a hydrophone (underwater speaker) having a high pressure gas tank, a differential pressure sensor and two controllable valves. A controller operates the valves based on an input of the pressure sensor such that an external pressure equals an internal pressure.

In JPH8-251687, there is disclosed a pressure equalising device for an underwater sound source. This pressure equaliser includes a diaphragm for generating the sound open to the water. A compression tank together with flow rate control valves and gas injection and gas exhaust lines are used to try and maintain the pressure to the other side of the diaphragm. Again such pressure equalising is limited due to poor sealing of the sound source such that a constant gas supply is needed and the equalisation occurs through varying the flow rate of the gas supplied or when exhausted, released to the sea. Accordingly, such a system is relatively crude and is unable to be used at greater depths with any degree of accuracy. In particular, the system is not a closed system, requiring constant recharging of the gas supply leading to its inability to be located at certain sites where constant recharging is not possible through operational difficulties such as depth or access.

Thus, it is the aim of the present invention to mitigate such disadvantages of passive gas or oil pressure equalising systems

According to a first aspect of the present invention there is provided a pressure regulator system including a pressure regulator, said pressure regulator including a valve, and a gas supply connected thereto, each of said valve and said gas supply is coupled to a processor, said valve, gas supply and processor are disposed within a fluid tight housing, said pressure regulator system including an external pressure sensor coupled to the processor through the fluid tight housing, said system also including a pressure sealed and fluid tight container, said container containing both an acoustic device, disposable under water, and an internal pressure sensor, whereby said pressure regulator is gas coupled to said fluid tight container, and said internal pressure sensor is connected to said processor, said pressure regulator system being a closed system for selectively removing gas from the container to the gas supply or supplying the gas from the gas supply to the container thereby regulating the pressure in the container, wherein said processor is adapted to receive information from both the internal and external sensors, to compare said information therefrom and consequently to control said pressure regulator; characterised in that: said closed system is provided by the gas supply comprising a compressor connected to a gas storage chamber, wherein said compressor is fluidly connected

to said fluid tight chamber, and said gas storage chamber is further fluidly connected to said fluid tight container via said valve, both said compressor and valve being under the control of said processor.

Embodiments of the present invention will now be described by way of example only and with reference to the accompanying drawings, of which:
Figure 1 is a schematic diagram of the present invention including an acoustic device;
Figure 2 is a graph showing the maintenance of a set pressure differential between the acoustic chamber and the hydrostatic pressure at varying depths.
Figure 3 is a schematic diagram of an alternative embodiment of the present invention coupled to an acoustic device; and
Figure 4 is a schematic diagram of another alternative embodiment of the present invention coupled to two acoustic devices.

### Description

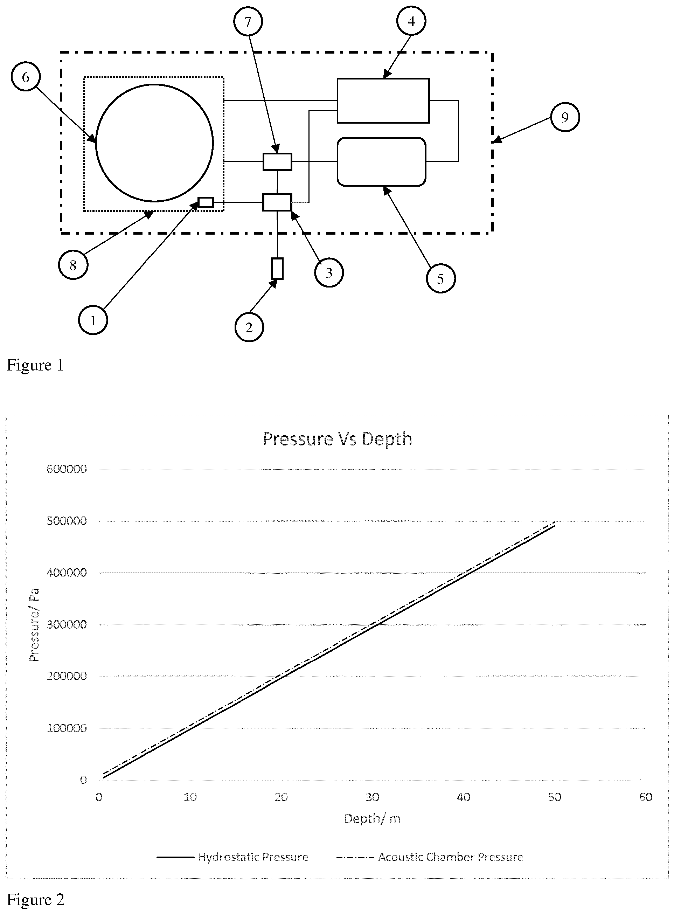

In Figure 1 there is shown an acoustic device in the form of a loudspeaker 6 and in close proximity an internal pressure sensor 1. The acoustic device and internal pressure sensor are contained within a pressure sealed and fluid tight container 8. The container is fluid impervious to a fluid such as water and is typically sealed to contain under pressure, a fluid such as air or a gas such as nitrogen especially in high humidity areas.

In contrast to the prior art example of the neoprene bag, the present invention deploys active pressure regulation. Accordingly, the internal pressure sensor 1 of the pressure regulator is coupled to a microprocessor or computer 3. The pressure regulator also includes a compressor 4 coupled to the acoustic device 6 and/or fluid tight container to remove fluid from the pressure tight (acoustic) chamber 8 as the water level increases, thus reducing the pressure in the acoustic chamber 8. The compressor is also coupled to the microprocessor 3. A gas storage container 5 receives gas from the compressor 4 and is connected to a valve 7 which is also connected to the microprocessor 3 and the acoustic chamber 8.

The pressure regulator is contained with a fluid or water tight housing 9 to which is attached an external pressure sensor 2. The fluid or water tight housing is fluid impervious to a fluid such as water and may also be sealed to contain under pressure, a fluid such as air or a gas such as nitrogen. The external pressure sensor 2 is also coupled to the microprocessor 3.

The coupling of the various elements to the pressure sealed and fluid tight areas is effected by way of seals known to persons skilled in the art, e.g. o rings, dual rubber o rings and/or threaded connections.

In operation, the microprocessor 3 receives information from the internal pressure sensor regarding the pressure inside, adjacent or in proximity to the acoustic device 6 and compares the same with information received from the external pressure sensor 2. Needless to say, the external and internal pressure sensors are disposed at the same depth within a tolerance of preferably +/- 0.01 m but tolerances of between 0.01 m and 0.5 m are envisaged.

Alternatively, the external and internal pressure sensors may be disposed at different depths or outside of the depth tolerance and the microprocessor applies a calibration offset.

If the pressure difference between the external and internal pressure sensors exceeds a predetermined tolerance, then the microprocessor 3 instructs the valve 7 to release gas from the gas storage container 5 to increase the gas pressure around the acoustic device 6. Conversely if the gas pressure is too great in the acoustic container 8, then the microprocessor instructs the valve 7 to activate and instructs the compressor 4 to enable gas to be stored in the gas storage container 5.

The graph in Figure 2 illustrates how the pressure within the acoustic chamber varies with depth. Preferably, the acoustic chamber is maintained at a constant pressure of anywhere between 0 Pa and 100 kPa, and most preferably 7.5 kPa above the hydrostatic water pressure across a depth range of 0 m to 100 m with a predetermined tolerance of pressure differential of between 1 Pa and 1 kPa and most preferably a pressure differential tolerance of 10 Pa.

A feedback loop develops such that when the two pressures from the internal and external pressure sensors are within the predetermined tolerance, then the microprocessor instructs the valve to shut.

As is the case with tidal water levels and varying river water heights, when the water level drops, the pressure in the acoustic chamber will need to decrease to maintain the predetermined pressure differential. Therefore, the microprocessor 3 instructs the gas compressor to remove air from the acoustic chamber which is stored in the gas storage container 5. When the two pressures from the internal and external pressure sensors are within the predetermined tolerance, then the microprocessor instructs the gas compressor to switch off.

The present invention thus enables the gas pressure around the acoustic device to be increased and/or decreased to enable a more efficient acoustic response of the acoustic device irrespective of the depth at which the acoustic device is deployed.

As gas is compressed and stored in the gas storage container 5 and then released when required into the acoustic chamber, the pressure regulator is a closed system. Accordingly, replenishment is not required and the pressure regulator can be deployed at greater depths, difficult access areas and over a longer period of time than known hitherto; possibly up to 10 years. In addition, the present invention has far greater resolution than known previously e.g. 01.kPa over 30m and 0.3kPa over 100m.

The present invention provides a closed active pressure regulation relatively quickly too which is most desirable in areas of dramatic changes in water depth. The microprocessor can react within 1 second of any pressure changes. Any increase in water depth and so raising of the internal pressure can be achieved much more quickly than decreasing the internal pressure. For example, the present invention can achieve a rate of change of depth of 5m and so changes of 50 kPa per minute.

The pressure regulator is supplied with a power source not shown.

In Figure 1, the acoustic device is shown within the watertight housing 9 of the pressure regulator. Thus, the watertight housing 9 may also need to be pressure sealed; particularly if the acoustic chamber 8 is omitted. In which case, references to the gas pressure in the acoustic container refer to gas pressure in the regulator housing.

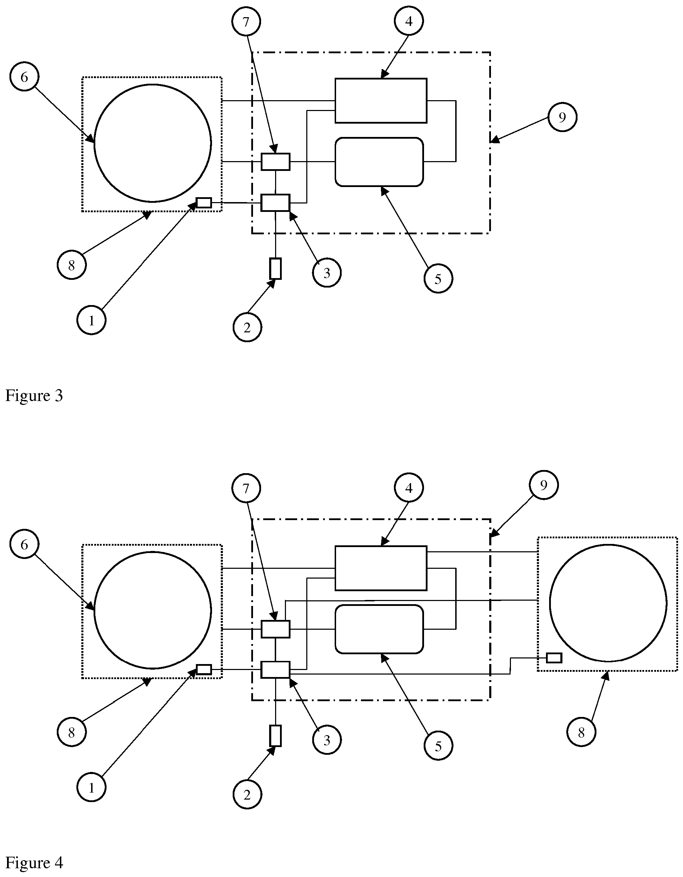

Figures 3 and 4 depict alternative embodiments of the present invention. In these two instances, the acoustic device 6 or devices 6 within the respective acoustic chamber 8 is disposed outside of the waterproof housing 9.

Figure 4 depicts the pressure regulator coupled to two acoustic devices. The same pressure regulator regulates the pressure within each pressure sealed and water tight container housing each containing a respective acoustic device. The acoustic devices may or may not be at the same depth and so require the same or different pressure. The pressure regulator may thus require two or more valves each coupled to a respective acoustic device to ensure optimum pressure regulation around the respective acoustic device. Needless to say, the present invention also encompasses two or more acoustic devices in the embodiments shown in figures 1 and 3.

## Claims

1. A pressure regulator system including a pressure regulator, said pressure regulator including a valve (7), and a gas supply (4, 5) connected thereto, each of said valve and said gas supply is coupled to a processor (3), said valve, gas supply and processor are disposed within a fluid tight housing (9), said pressure regulator system including an external pressure sensor (2) coupled to the processor through the fluid tight housing (9), said system also including a pressure sealed and fluid tight container (8), said container containing both an acoustic device (6), disposable under water, and an internal pressure sensor (1), whereby said pressure regulator is gas coupled to said fluid tight container (8), and said internal pressure sensor is connected to said processor, said pressure regulator system being a closed system for selectively removing gas from the container to the gas supply or supplying the gas from the gas supply to the container thereby regulating the pressure in the container, wherein said processor is adapted to receive information from both the internal and external sensors, to compare said information therefrom and consequently to control said pressure regulator; **characterised in that**: said closed system is provided by the gas supply comprising a compressor (4) connected to a gas storage chamber (5), wherein said compressor is fluidly connected to said fluid tight chamber (8), and said gas storage chamber (5) is further fluidly connected to said fluid tight container (8) via said valve (7), both said compressor (4) and valve (7) being under the control of said processor.

2. A pressure regulator system as claimed in claim 1 adapted such that when the pressure difference between the external and internal pressure sensors exceeds a predetermined tolerance, the processor (3) is adapted to instruct the valve (7) to either open to release gas from the gas storage container (5) to increase the gas pressure around the acoustic device (6), or instruct the valve (7) to close and the compressor (4) to enable gas to be pumped in the gas storage container (5).

3. A pressure regulator system as claimed in any one of the preceding claims in which said fluid tight housing (9) for the pressure regulator is also the also fluid tight container (8) of the acoustic device.

4. A pressure regulator system as claimed in any of the preceding claims, in which there is more than one acoustic device.

## Patentansprüche

1. Druckreglersystem, beinhaltend einen Druckregler, wobei der Druckregler ein Ventil (7) und eine damit verbundene Gaszufuhr (4, 5) beinhaltet, wobei jedes bzw. jede von dem Ventil und der Gaszufuhr an einen Prozessor (3) gekoppelt ist, wobei das Ventil, die Gaszufuhr und der Prozessor innerhalb eines fluiddichten Gehäuses (9) angeordnet sind, wobei das Druckreglersystem einen externen Drucksensor (2) beinhaltet, der durch das fluiddichte Gehäuse (9) an den Prozessor gekoppelt ist, wobei das System außerdem einen druckdichten und fluiddichten Behälter (8) beinhaltet, wobei der Behälter sowohl eine akustische Vorrichtung (6), die unter Wasser angeordnet werden kann, als auch einen internen Drucksensor (1) enthält, wobei der Druckregler an den fluiddichten Behälter (8) gasgekoppelt ist und der interne Drucksensor mit dem Prozessor verbunden ist, wobei das Druckreglersystem ein geschlossenes System zum selektiven Abziehen von Gas aus dem Behälter zu der Gaszufuhr oder Zuführen des Gases von der Gaszufuhr zu dem Behälter ist, wodurch der Druck in dem Behälter geregelt wird, wobei der Prozessor dazu eingerichtet ist, Informationen von sowohl dem internen als auch dem externen Sensor zu erhalten, die Informationen davon zu vergleichen und dementsprechend den Druckregler zu steuern; **dadurch gekennzeichnet, dass**: das geschlossene System von der Gaszufuhr bereitgestellt wird, die einen Verdichter (4) umfasst, der mit einer Gasspeicherkammer (5) verbunden ist, wobei der Verdichter mit der fluiddichten Kammer (8) fluidverbunden ist und die Gasspeicherkammer (5) weiterhin mittels dem Ventil (7) mit dem fluiddichten Behälter (8) fluidverbunden ist, wobei sowohl der Verdichter (4) als auch das Ventil (7) unter der Steuerung des Prozessors stehen.

2. Druckreglersystem nach Anspruch 1, das derart eingerichtet ist, dass, wenn der Druckunterschied zwischen dem externen und dem internen Drucksensor eine vorher bestimmte Toleranz überschreitet, der Prozessor (3) dazu eingerichtet ist, das Ventil (7) anzuweisen, sich entweder zu öffnen, um Gas aus dem Gasspeicherbehälter (5) freizusetzen, um den Gasdruck um die akustische Vorrichtung (6) zu erhöhen, oder das Ventil (7) anzuweisen, sich zu schließen, und den Verdichter (4) anzuweisen, zu ermöglichen, dass Gas in den Gasspeicherbehälter (5) gepumpt wird.

3. Druckreglersystem nach einem der vorhergehenden Ansprüche, wobei das fluiddichte Gehäuse (9) für den Druckregler außerdem der ebenfalls fluiddichte Behälter (8) der akustischen Vorrichtung ist.

4. Druckreglersystem nach einem der vorhergehenden Ansprüche, wobei mehr als eine akustische Vorrichtung vorliegt.

## Revendications

1. Un système régulateur de pression incluant un régulateur de pression, ledit régulateur de pression incluant une vanne (7) et une alimentation en gaz (4, 5) connectées à celui-ci, chacune de ladite vanne et de ladite alimentation en gaz est couplée à un processeur (3), ladite vanne, ladite alimentation en gaz et ledit processeur sont disposés à l'intérieur d'un logement étanche aux fluides (9), ledit système régulateur de pression incluant un capteur de pression externe (2) couplé au processeur à travers le logement étanche aux fluides (9), ledit système incluant aussi un réservoir hermétique à la pression et étanche aux fluides (8), ledit réservoir contenant à la fois un dispositif acoustique (6) pouvant être disposé sous l'eau, et un capteur de pression interne (1), grâce à quoi ledit régulateur de pression est couplé par le gaz audit réservoir étanche aux fluides (8), et ledit capteur de pression interne est connecté audit processeur, ledit système régulateur de pression étant un système fermé afin de retirer sélectivement le gaz depuis le réservoir à l'alimentation en gaz ou de fournir le gaz depuis l'alimentation en gaz au réservoir, régulant ainsi la pression dans le réservoir,, dans lequel ledit processeur est conçu pour recevoir des informations des deux capteurs de pression externe et interne, pour comparer lesdites informations de ces derniers et par conséquent pour contrôler ledit régulateur de pression ; **caractérisé en ce que** : ledit système fermé est alimenté par l'alimentation en gaz comprenant un compresseur (4) connecté à une chambre de stockage de gaz (5), dans lequel ledit compresseur est connecté fluidiquement à ladite chambre étanche aux fluides (8), et ladite chambre de stockage de gaz (5) est en outre connectée fluidiquement audit réservoir étanche aux fluides (8) par l'intermédiaire de ladite vanne (7), à la fois ledit compresseur (4) et ladite vanne (7) étant sous le contrôle dudit processeur.

2. Un système régulateur de pression selon la revendication 1, conçu de telle sorte que, quand la différence de pression entre les capteurs de pression externe et interne excède une tolérance prédéterminée, le processeur (3) est conçu pour soit ordonner à la vanne (7) de s'ouvrir pour libérer le gaz du réservoir de stockage de gaz (5) afin d'augmenter la pression du gaz autour du dispositif acoustique (6), soit ordonner à la vanne (7) de se fermer et au compresseur (4) de permettre au gaz d'être pompé dans le réservoir de stockage de gaz (5).

3. Un système régulateur de pression selon l'une quelconque des revendications précédentes, dans lequel ledit logement étanche aux fluides (9) pour le régulateur de pression est aussi le réservoir étanche aux fluides (8) du dispositif acoustique.

4. Un système régulateur de pression selon l'une quelconque des revendications précédentes, dans lequel il y a plus d'un dispositif acoustique.
